(19)

Europäisches
Patentamt

European
Patent Office

Office européen
des brevets

(11)  **EP 4 011 617 A1**

(12)  **EUROPEAN PATENT APPLICATION**
published in accordance with Art. 153(4) EPC

(43) Date of publication:
**15.06.2022  Bulletin 2022/24**

(21) Application number: **20851099.0**

(22) Date of filing: **03.08.2020**

(51) International Patent Classification (IPC):
*B32B 27/00* (2006.01)      *B32B 27/38* (2006.01)
*B32B 27/40* (2006.01)      *C09D 5/00* (2006.01)
*C08K 5/1515* (2006.01)    *C08K 5/29* (2006.01)
*C08L 23/26* (2006.01)      *C08L 101/00* (2006.01)
*C09D 163/00* (2006.01)    *C09D 175/04* (2006.01)
*C08L 71/12* (2006.01)      *B29C 65/04* (2006.01)
*B29C 65/06* (2006.01)      *B29C 65/08* (2006.01)
*B29C 65/16* (2006.01)      *B29C 65/18* (2006.01)
*B29C 65/30* (2006.01)      *B29C 65/70* (2006.01)

(52) Cooperative Patent Classification (CPC):
**B29C 65/04; B29C 65/06; B29C 65/08;**
**B29C 65/16; B29C 65/18; B29C 65/30;**
**B29C 65/70; B32B 27/00; B32B 27/38;**
**B32B 27/40; C08K 5/1515; C08K 5/29;**
**C08L 23/26; C08L 71/12; C08L 101/00;**      (Cont.)

(86) International application number:
**PCT/JP2020/029648**

(87) International publication number:
**WO 2021/024978 (11.02.2021 Gazette 2021/06)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **06.08.2019  JP 2019144424**
               **27.05.2020  JP 2020092433**

(71) Applicant: **Showa Denko K.K.**
     **Tokyo 105-8518 (JP)**

(72) Inventors:
  • **OTANI, Kazuo**
    **Tokyo 105-8518 (JP)**
  • **NUMAO, Shinji**
    **Tokyo 105-8518 (JP)**
  • **TAKAHASHI, Nobuyuki**
    **Tokyo 105-8518 (JP)**
  • **NIIBAYASHI, Ryota**
    **Tokyo 105-8518 (JP)**

(74) Representative: **Strehl Schübel-Hopf & Partner**
     **Maximilianstrasse 54**
     **80538 München (DE)**

(54)  **PRIMER-EQUIPPED THERMOPLASTIC RESIN MEMBER, AND RESIN-RESIN CONJUGATE**

(57)      A primer-attached thermoplastic resin material having a thermoplastic resin material and one or plural primer layers laminated on the thermoplastic resin material, wherein at least one layer of the primer layers is an in-situ polymerizable composition layer of an in-situ polymerizable composition polymerized on the thermoplastic resin material.

Fig.1

EP 4 011 617 A1

**(Cont. next page)**

(52) Cooperative Patent Classification (CPC): (Cont.)
     **C09D 5/00; C09D 163/00; C09D 175/04**

**Description**

Technical Field

The present invention relates to a primer-attached thermoplastic resin material and a method for producing the same favorable for use for firmly welding the same or different types of thermoplastic resin materials, and to a resin-resin bonded article using the primer-attached thermoplastic resin material and a method for producing the same.

Background Art

Recently, from the viewpoint of weight reduction and cost reduction for products, resinization of members in various fields such as automobile parts, medical devices and home electric appliances to produce resin molded articles is carried out frequently. Also from the viewpoint of productivity increase for resin molded articles, often employed is a method of previously molding plural split resin parts and bonding the thus-molded, plural split resin parts to each other to complete a resin molded article.

As a means for bonding such split molding resin parts to each other, mechanical bonding, adhesive bonding or welding is employed. Among these, welding is a bonding method that is especially highly reliable and useful for productivity. Welding includes various methods depending on the way of heating resin members, and specifically includes ultrasonic welding, vibration welding, thermal welding, hot air welding, induction welding and injection welding.

Welding is generally a bonding method for use for bonding the same type of thermoplastic resin materials, but depending on the welding method and the kind of the resin used, a sufficient bonding strength could not be expressed as the case may be. Owing to the influence of breakage of a base material in welding, for example, the bonding strength may be often approximately 50 to 80% of the original base material strength. For this reason, improvement of a welding method is carried out.

Regarding bonding of the same type of thermoplastic resin materials, for example, PTL 1 discloses a technique of bonding polypropylene to polypropylene by previously processing polypropylene by corona discharge treatment.

Also, welding can be used for bonding different types of thermoplastic resins each having a close solubility parameter (hereinafter referred to as SP value).

Regarding bonding of different types of thermoplastic resin material, for example, PTLs 2 and 3 disclose a technique of ultrasonically welding a molded article of a thermoplastic resin composition to a thermoplastic resin of a different type from that of the thermoplastic resin of the molded article, via a functional group-having thermoplastic sheet material and reinforcing fiber bundles. PTL 4 discloses a technique of inserting an interlayer between members to be welded and vibrating the interlayer with fixing it to an ultrasonic resonator hone to thereby ultrasonically weld the two members to be welded.

Citation List

Patent Literature

PTL 1: JP 8-126823 A
PTL 2: JP 2017-202667 A
PTL 3: JP 2017-206014 A
PTL 4: JP 2017-284862 A

Summary of Invention

Technical Problem

Regarding bonding the same type of thermoplastic resin materials as above, a sufficient bonding strength could not be secured even by the method of PTL 1.

The strength of welding is expressed by entangling and crystallization of molecules by molecular diffusion in the bonding interface. Consequently, heretofore, there has been a problem that, in welding by bonding of different types of thermoplastic resin materials, a sufficient bonding strength could not be attained.

The present invention has been made in consideration of the above technical background, and its object is to provide a primer-attached thermoplastic resin material favorable for use for firmly welding thermoplastic resin materials of the same type or a different type, and related techniques thereof. The related techniques mean a method for producing the primer-attached thermoplastic resin material, and a resin-resin bonded article using the primer-attached thermoplastic resin material and a method for producing the same.

Solution to Problem

For attaining the above-mentioned object, the present invention provides the following means.

In this description, bonding means connecting an object and an object, and adhering and welding are subordinate conception thereof. Adhering means that two adherends (to be adhered) are made to be in a bonded state via an organic material (e.g., thermosetting resin or thermoplastic resin) like a tape or an adhesive. Welding means that the surface of a thermoplastic resin of an adherend is melted by heat to be in a bonded state through entangling and crystallization by molecular diffusion by contact pressurization and cooling.

(Primer-attached Thermoplastic Resin Material)

[1] A primer-attached thermoplastic resin material having a thermoplastic resin material and one or plural primer layers laminated on the thermoplastic resin material, wherein:

at least one layer of the primer layers is an in-situ polymerizable composition layer of an in-situ polymerizable composition polymerized on the thermoplastic resin material.

[2] The primer-attached thermoplastic resin material according to [1], wherein the in-situ polymerizable composition layer is a layer that is in direct contact with the thermoplastic resin material.

[3] The primer-attached thermoplastic resin material according to [1] or [2], wherein the in-situ polymerizable composition contains at least one of the following (1) to (7):

(1) A combination of a difunctional isocyanate compound and a diol,
(2) A combination of a difunctional isocyanate compound and a difunctional amino compound,
(3) A combination of a difunctional isocyanate compound and a difunctional thiol compound,
(4) A combination of a difunctional epoxy compound and a diol,
(5) A combination of a difunctional epoxy compound and a difunctional carboxy compound,
(6) A combination of a difunctional epoxy compound and a difunctional thiol compound,
(7) A monofunctional radical-polymerizable monomer.

[4] The primer-attached thermoplastic resin material according to [1] or [2], wherein the in-situ polymerizable composition contains a composition containing at least one of the following (1) to (7), and a maleic anhydride-modified polypropylene or a modified polyphenylene ether:

(1) A combination of a difunctional isocyanate compound and a diol,
(2) A combination of a difunctional isocyanate compound and a difunctional amino compound,
(3) A combination of a difunctional isocyanate compound and a difunctional thiol compound,
(4) A combination of a difunctional epoxy compound and a diol,
(5) A combination of a difunctional epoxy compound and a difunctional carboxy compound,
(6) A combination of a difunctional epoxy compound and a difunctional thiol compound,
(7) A monofunctional radical-polymerizable monomer.

[5] The primer-attached thermoplastic resin material according to [1] or [2], wherein the in-situ polymerizable composition contains a composition containing at least one of the following (1) to (7), and a thermoplastic resin differing from the thermoplastic resin that constitutes the thermoplastic resin material:

(1) A combination of a difunctional isocyanate compound and a diol,
(2) A combination of a difunctional isocyanate compound and a difunctional amino compound,
(3) A combination of a difunctional isocyanate compound and a difunctional thiol compound,
(4) A combination of a difunctional epoxy compound and a diol,
(5) A combination of a difunctional epoxy compound and a difunctional carboxy compound,
(6) A combination of a difunctional epoxy compound and a difunctional thiol compound,
(7) A monofunctional radical-polymerizable monomer.

[6] The primer-attached thermoplastic resin material according to [1] or [2], wherein the in-situ polymerizable composition contains a composition containing at least one of the following (1) to (7), a maleic anhydride-modified polypropylene or a modified polyphenylene ether, and a thermoplastic resin differing from the thermoplastic resin that constitutes the thermoplastic resin material:

(1) A combination of a difunctional isocyanate compound and a diol,
(2) A combination of a difunctional isocyanate compound and a difunctional amino compound,
(3) A combination of a difunctional isocyanate compound and a difunctional thiol compound,
(4) A combination of a difunctional epoxy compound and a diol,
(5) A combination of a difunctional epoxy compound and a difunctional carboxy compound,
(6) A combination of a difunctional epoxy compound and a difunctional thiol compound,
(7) A monofunctional radical-polymerizable monomer.

[7] The primer-attached thermoplastic resin material according to any of [3] to [6], wherein the in-situ polymerizable composition contains the above (4) and the diol of the above (4) is a difunctional phenol compound.

[8] The primer-attached thermoplastic resin material according to any of [1] and [3] to [7], wherein the primer layer has a thermosetting resin layer formed of a composition containing a thermosetting resin between the in-situ polymerizable composition layer and the thermoplastic resin material.

[9] The primer-attached thermoplastic resin material according to [8], wherein the thermosetting resin is at least one selected from the group consisting of an urethane resin, an epoxy resin, a vinyl ester resin and an unsaturated polyester resin.

(Production Method for Primer-attached Thermoplastic Resin Material]

[10] A method for producing a primer-attached thermoplastic resin material of [1], including applying the in-situ polymerizable composition dissolved in a solvent onto the surface of the thermoplastic resin material followed by polymerizing the in-situ polymerizable composition.

(Resin-Resin Bonded Article)

[11] A resin-resin bonded article formed by welding another thermoplastic resin material to the primer layer of the primer-attached thermoplastic resin material of any of [1] to [9].

[12] The resin-resin bonded article according to [11], wherein the another thermoplastic resin material is a primer-attached thermoplastic resin material of any of [1] to [9], and the primer layers of the materials are welded to each other.

[13] The resin-resin bonded article according to [11] or [12], wherein the monomer accounting for the maximum content of the monomers that constitute the thermoplastic resin to constitute the another thermoplastic resin material is the same as the monomer accounting for the maximum content of the monomers that constitute the thermoplastic resin to constitute the primer-attached thermoplastic resin material of any of [1] to [9], and the content of the monomer is each 70% by mass or more.

(Production Method for Resin-Resin Bonded Article)

[14] A production method for a resin-resin bonded article of any of [11] to [13], including welding another thermoplastic resin material to the primer layer of the primer-attached thermoplastic resin material according to at least one method selected from the group consisting of an ultrasonic welding method, a vibration welding method, an electromagnetic induction method, a high frequency method, a laser method, and a thermal press method.

[15] A production method for a resin-resin bonded article of any of [11] to [13], including injection-welding another thermoplastic resin material to the primer layer of the primer-attached thermoplastic resin material according to an injection-molding method.

Advantageous Effects of Invention

According to the present invention, there can be provided a primer-attached thermoplastic resin material favorable for use for firmly welding thermoplastic resin materials of the same type or a different type, and related techniques thereof.

Brief Description of Drawings

Fig. 1 is an explanatory view showing a constitution of a primer-attached thermoplastic resin material in one embodiment of the present invention.
Fig. 2 is an explanatory view showing a constitution of a primer-attached thermoplastic resin material in another embodiment of the present invention.
Fig. 3 is an explanatory view showing a constitution of a resin-resin bonded article in one embodiment of the present invention.

Description of Embodiments

The primer-attached thermoplastic resin material and related techniques thereof of the present invention are described in detail.
In this description, "(meth)acryl" means acryl and/or methacryl, and "(meth)acrylate" means acrylate and/or methacrylate.

[Primer-attached Thermoplastic Resin Material]

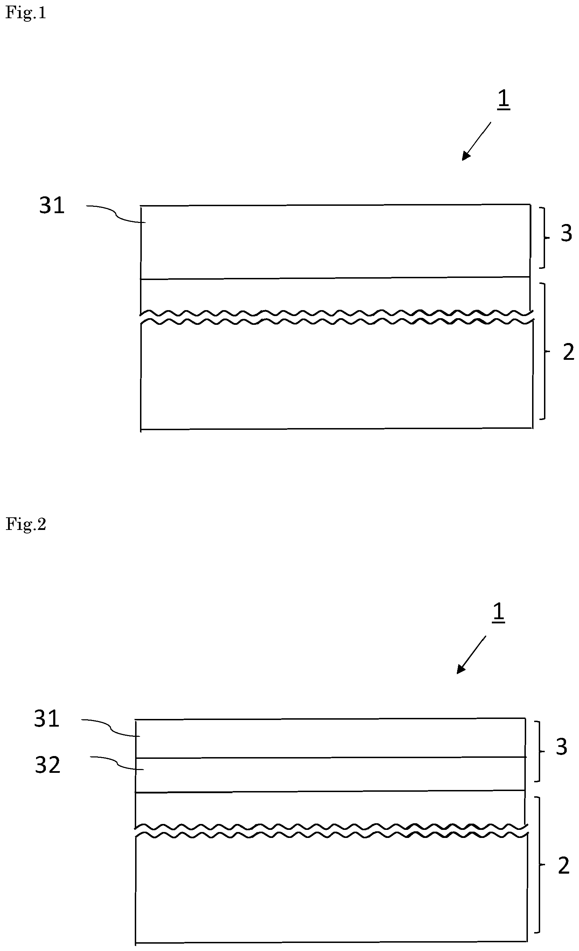

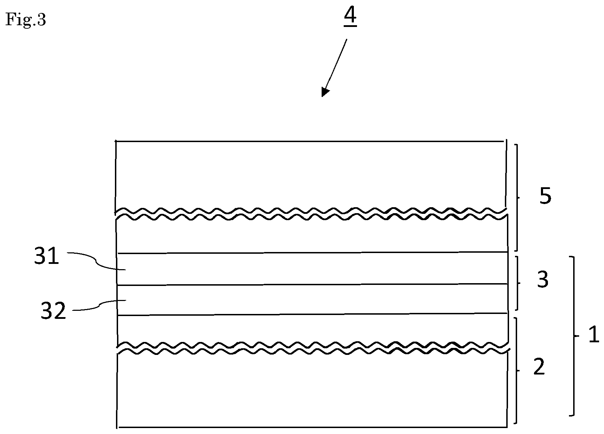

The primer-attached thermoplastic resin material 1 of the present embodiment is, as shown in Fig. 1, a laminate having a thermoplastic resin material 2 and one or plural primer layers 3 laminated on the thermoplastic resin material. In the case of Fig. 1, at least one of the primer layers 3 is an in-situ polymerizable composition layer 31 formed by polymerization of an in-situ polymerizable composition on the thermoplastic resin material 2.
In the present invention, the in-situ polymerizable composition means a composition to form a thermoplastic structure, that is, a linear polymer structure by polyaddition reaction of a combination of specific difunctional compounds in situ, that is, on various materials in the presence of a catalyst, or by radical polymerization reaction of a specific monofunctional monomer. The in-situ polymerizable composition is thermoplastic without forming a three-dimensional network of a crosslinked structure, differing from a thermosetting resin that constitutes a three-dimensional network of a crosslinked structure by polymerization.
The in-situ polymerizable composition layer 31 is preferably a layer formed of a composition containing an in-situ polymerizable phenoxy resin. The in-situ polymerizable phenoxy resin is a resin also called a thermoplastic epoxy resin, an in-situ curable phenoxy resin or an in-situ curable epoxy resin, and forms a thermoplastic structure, that is, a linear polymer structure by polyaddition reaction of a difunctional epoxy resin and a difunctional phenol compound in the presence of a catalyst.
In the present invention, the primer layer means, in forming a resin-resin bonded article by welding and integrating the thermoplastic resin material 2 and another thermoplastic resin material 5 that is another object to be bonded, as shown in Fig. 3 to be mentioned below, a layer to exist between the thermoplastic resin material 2 and the other thermoplastic resin material 5 to thereby improve the bonding strength of the thermoplastic resin material 2 to the other thermoplastic resin material 5.
In the case where the other thermoplastic resin material 5 is a thermoplastic resin material of the same thermoplastic resin as the thermoplastic resin that constitutes the thermoplastic resin material 2, the present invention is favorable for use for firmly welding the thermoplastic resin material 2 and the other thermoplastic resin material 5. In the case where the other thermoplastic resin material 5 is a thermoplastic resin material of a different thermoplastic resin from the thermoplastic resin that constitutes the thermoplastic resin material 2, in general, the SP value of the thermoplastic resin material 2 differs from that of the other thermoplastic resin material 5 in many cases, and accordingly, the present invention is also favorable for use for firmly welding such different types of thermoplastic resin materials.
Here, in this description, "the same type of thermoplastic resins" means thermoplastic resins such that the monomer accounting for the maximum content of the monomers that constitute the thermoplastic resin is the same and the content of the monomer is each 70% by mass or more. On the other hand, "different types of thermoplastic resins" mean other thermoplastic resins than the "same type of thermoplastic resins", specifically, thermoplastic resins not having any common monomer, or thermoplastic resins which differ in the monomer that accounts for the maximum content in the monomers constituting the thermoplastic resin, or thermoplastic resins which are the same in point of the monomer accounting for the maximum content and in which the content of at least one monomer accounting for the maximum content is less than 70% by mass.

<Thermoplastic Resin Material 2>

There are no particular restrictions on the form of the thermoplastic resin material 2, which may be massive or film shaped.

The thermoplastic resin to constitute the thermoplastic resin material 2 is not specifically limited.

Examples of the thermoplastic resin include polypropylene (PP, SP value: 8.0 $(J/cm^3)^{1/2}$), polyamide 6 (PA6, SP value: 12.7 to 13.6 $(J/cm^3)^{1/2}$), polyamide 66 (PA66, SP value: 13.6 $(J/cm^3)^{1/2}$), modified polyphenylene ether (m-PPE), polyphenylene sulfide (PPS, SP value: 19.8 $(J/cm^3)^{1/2}$), polyether imide (PEI), polycarbonate (PC, SP value: 9.7 $(J/cm^3)^{1/2}$), and polybutylene terephthalate (PBT, SP value: 20.5 $(J/cm^3)^{1/2}$).

Here, the solubility parameter (SP value) is a value ($\delta$) to provide a numerical prediction of the degree of interaction between materials, defined by the regular solution theory introduced by Hildebrand.

Various methods for calculating SP values have been proposed, and for example, the values can be calculated according to the method proposed by Fedors (Polym. Eng. Sci., 1974, Vol. 14, p. 147) and based on the following formula (1).

$$\delta = (\Sigma E_{coh}/\Sigma V)^{1/2} \qquad (1)$$

wherein $\delta$ means a solubility parameter $(J^{0.5}/cm^{1.5})$, $E_{coh}$ means a cohesive energy density (J/mol), V means a molar volume $(cm^3/mol)$, $\Sigma$ means that these numerical values given for each atomic group are summed for all atomic groups constituting the monomer. The numerical values $E_{coh}$ and V for each atomic group are listed, for example, in "Properties of Polymers, Third completely revised edition", Table 7.3.

<Primer Layer 3>

The primer layer is laminated on the thermoplastic resin material 2.

[In-situ Polymerizable Composition Layer 31]

As described above, at least one primer layer is the in-situ polymerizable composition layer 31 formed by polymerization of an in-situ polymerizable composition on the thermoplastic resin material.

The in-situ polymerizable composition layer 31 can be formed by applying the in-situ polymerizable composition dissolved in a solvent onto the surface of the thermoplastic resin material 2, then making the in-situ polymerizable composition penetrate into a surface layer of the thermoplastic resin material 2 having swollen through solvent penetration thereinto, and evaporating the solvent to polymerize the in-situ polymerizable composition. Also, the in-situ polymerizable composition layer 31 can be formed by applying an emulsion containing the in-situ polymerizable composition or a powdery coating composition containing the in-situ polymerizable composition onto the surface of the thermoplastic resin material 2, and polymerizing the in-situ polymerizable composition on the thermoplastic resin material 2. Further, the in-situ polymerizable composition layer 31 can be formed by applying the in-situ polymerizable composition dissolved in a solvent to a release film to be a film thereon having a thickness of 1 to 100 $\mu$m after dried, then leaving it in an environment at room temperature to 40°C to promote reaction while the solvent is evaporated away to thereby make it in a B-stage, putting the resultant film formed on the release film to be on the thermoplastic resin material 2 in such a manner that the side of the film opposite to the release film faces the thermoplastic resin material 2, then peeling the release film from the B-staged film, and polymerizing the B-staged film by heating at 40 to 150°C for 1 to 30 minutes.

Regarding the powdery coating composition, a powder prepared by grinding the B-staged film may be applied to the thermoplastic resin material 2 to form a layer thereon having a thickness of 1 to 100 $\mu$m, and in that manner, the resultant powder can be used as a powdery coating primer as it is. Regarding the emulsion, the powdery coating primer may be post-emulsified using an emulsifier, and the resultant emulsion may be applied to the thermoplastic resin material 2 to form a film having a thickness of 1 to 100 $\mu$m, and in that manner, the emulsion can be used as an emulsified (water-based) primer.

Preferably, the in-situ polymerizable composition layer 31 contains 50 to 100% by mass of the in-situ polymerizable resin formed by polymerization of the in-situ polymerizable composition, more preferably 70 to 100% by mass thereof.

Preferably, the in-situ polymerizable composition contains at least one of the following (1) to (7), more preferably the following (4), and even more preferably a combination of a difunctional epoxy compound and a difunctional phenol compound.

(1) A combination of a difunctional isocyanate compound and a diol,

(2) A combination of a difunctional isocyanate compound and a difunctional amino compound,

(3) A combination of a difunctional isocyanate compound and a difunctional thiol compound,

(4) A combination of a difunctional epoxy compound and a diol,

(5) A combination of a difunctional epoxy compound and a difunctional carboxy compound,

(6) A combination of a difunctional epoxy compound and a difunctional thiol compound,

(7) A monofunctional radical-polymerizable monomer.

The blending ratio of the difunctional isocyanate compound and the diol in (1) is preferably so defined that the molar equivalent ratio of the isocyanate group to the hydroxy group could be 0.7 to 1.5, more preferably 0.8 to 1.4, even more preferably 0.9 to 1.3.

The blending ratio of the difunctional isocyanate compound and the difunctional amino compound in (2) is preferably so defined that the molar equivalent ratio of the isocyanate group to the amino group could be 0.7 to 1.5, more preferably 0.8 to 1.4, even more preferably 0.9 to 1.3.

The blending ratio of the difunctional isocyanate compound and the difunctional thiol compound in (3) is preferably so defined that the molar equivalent ratio of the isocyanate group to the thiol group could be 0.7 to 1.5, more preferably 0.8 to 1.4, even more preferably 0.9 to 1.3.

The blending ratio of the difunctional epoxy compound and the diol in (4) is preferably so defined that the molar equivalent ratio of the epoxy group to the hydroxy group could be 0.7 to 1.5, more preferably 0.8 to 1.4, even more preferably 0.9 to 1.3.

The blending ratio of the difunctional epoxy compound and the difunctional carboxy compound in (5) is preferably so defined that the molar equivalent ratio of the epoxy group to the carboxy group could be 0.7 to 1.5, more preferably 0.8 to 1.4, even more preferably 0.9 to 1.3.

The blending ratio of the difunctional epoxy compound and the difunctional thiol compound in (6) is preferably so defined that the molar equivalent ratio of the epoxy group to the thiol group could be 0.7 to 1.5, more preferably 0.8 to 1.4, even more preferably 0.9 to 1.3.

Examples of the in-situ polymerizable compound include the following in-situ polymerizable compositions (A) to (D).

In-situ polymerizable composition (A): a composition containing at least one of the above (1) to (7).

In-situ polymerizable composition (B): a composition containing a composition containing at least one of the above (1) to (7), and a maleic anhydride-modified polypropylene or a modified polyphenylene ether.

In-situ polymerizable composition (C): a composition containing a composition containing at least one of the above (1) to (7), and a thermoplastic resin differing from the thermoplastic resin to constitute the thermoplastic resin material 2.

In-situ polymerizable composition (D): a composition containing a composition containing at least one of the above (1) to (7), a maleic anhydride-modified polypropylene or a modified polyphenylene ether, and a thermoplastic resin differing from the thermoplastic resin to constitute the thermoplastic resin material 2.

The in-situ polymerizable composition layer 31 is laminated as a primer layer 3 on the thermoplastic resin material 2, and accordingly, the same thermoplastic resin material or a different thermoplastic resin material can be firmly welded onto the thermoplastic resin material 2. Especially preferably, the in-situ polymerizable composition layer 31 is a layer that is in direct contact with the thermoplastic resin material 2.

As the in-situ polymerizable composition, preferably, a composition containing a thermoplastic resin similar to the thermoplastic resin to constitute the thermoplastic resin material 2 is selected. For example, in the case where the thermoplastic resin material 2 is a polyolefin, using an in-situ polymerizable composition that contains a maleic anhydride-modified polyolefin enables more firm welding. In the case where the thermoplastic resin material 2 is a modified polyphenylene ether, using an in-situ polymerizable composition that contains a modified polyphenylene ether enables more firm welding.

The primer layer 3 can be composed of plural layers containing the in-situ polymerizable composition layer 31. In the case where the primer layer 3 is composed of plural layers, preferably, the essential in-situ polymerizable composition layer 31 is so laminated that it can be an outermost surface on the side opposite to the thermoplastic resin material 2. In that case, the in-situ polymerizable composition is polymerized not on the surface of the thermoplastic resin material 2 but on the surface of the layer positioned directly below the in-situ polymerizable composition layer 31.

(In-situ Polymerizable Composition Layer A)

An in-situ polymerizable composition layer A is formed of a polymer of the above-mentioned in-situ polymerizable composition (A).

The in-situ polymerizable composition layer A can be formed by polyaddition reaction of the composition containing at least one of the above (1) to (6), in the presence of a catalyst. As the catalyst for polyaddition reaction, for example, tertiary amines such as triethylamine and 2,4,6-tris(dimethylaminomethyl)phenol, and phosphorus compounds such as triphenyl phosphines are preferably used. The polyaddition reaction is, though depending on the formulation of the composition, preferably carried out by heating at room temperature to 200°C for 5 to 120 minutes. Here, in this description, room temperature indicates 5 to 35°C, preferably 15 to 25°C. Specifically, the in-situ polymerizable composition layer A can be formed by dissolving a composition containing at least one of the above (1) to (6) in a solvent, applying the resultant solution to the thermoplastic resin material 2, then appropriately evaporating the solvent, followed by heating for polyaddition reaction to form a more firmly bonded, in-situ polymerizable composition layer. The in-situ polymerizable composition layer A can also be formed by arranging a B-staged film of a composition containing at least one of the above (1) to (6) on the thermoplastic resin material 2, and heating the film for polyaddition reaction.

The in-situ polymerizable composition layer A can also be formed by radical polymerization of a composition containing the above (7) monofunctional radical-polymerizable monomer. Depending on the formulation of the composition, the radical polymerization is preferably carried out by heating at room temperature to 200°C for 5 to 90 minutes. For photocuring, the polymerization reaction is carried out by irradiation with UV ray or visible ray.

Specifically, the in-situ polymerizable composition layer A can be formed by dissolving a composition containing the above (7) monofunctional radical-polymerizable monomer in a solvent, then applying the resultant solution to the thermoplastic resin material 2, followed by heating or photoirradiation for radical polymerization to form a more firmly bonded, in-situ polymerizable composition layer. The in-situ polymerizable composition layer A can also be formed by arranging a B-staged film of a composition containing the above (7) monofunctional radical-polymerizable monomer on the thermoplastic resin material 2, and heating or photoirradiating the film for radical polymerization reaction.

(Difunctional Isocyanate Compound)

The difunctional isocyanate compound is a compound that has two isocyanato groups, and examples thereof include a diisocyanate compound, such as hexamethylene diisocyanate, tetramethylene diisocyanate, dimer acid diisocyanate, 2,4- or 2,6-tolylene diisocyanate (TDI) and a mixture thereof, p-phenylene diisocyanate, xylylene diisocyanate, and diphenylmethane diisocyanate (MDI). Among these, TDI and MDI are preferred from the standpoint of the strength of the primer.

(Diol)

The diol is a compound that has two hydroxy groups, and examples thereof include an aliphatic glycol, such as ethylene glycol, propylene glycol, diethylene glycol, and 1,6-hexanediol, and bisphenols such as bisphenol A, bisphenol F and bisphenol S. Among these, propylene glycol and diethylene glycol are preferred from the standpoint of the toughness of the primer.

(Difunctional Amino Compound)

The difunctional amino compound is a compound that has two amino groups, and examples thereof include a difunctional aliphatic diamine and a difunctional aromatic diamine. Examples of the aliphatic diamine include ethylenediamine, 1,2-propanediamine, 1,3-propanediamine, 1,4-diaminobutane, 1,6-hexamethylenediamine, 2,5-dimethyl-2,5-hexanediamine, 2,2,4-trimethylhexamethylenediamine, isophoronediamine, bis(4-amino-3-methylcyclohexyl)methane, 1,3-diaminocyclohexane, and N-aminoethylpiperazine, and examples of the aromatic diamine include diaminodiphenylmethane and diaminodiphenylpropane. Among these, 1,3-propanediamine, 1,4-diaminobutane, and 1,6-hexamethylenediamine are preferred from the standpoint of the toughness of the primer.

(Difunctional Thiol Compound)

The difunctional thiol compound is a compound that has two mercapto groups in the molecule, and examples thereof include a difunctional secondary thiol compound, such as 1,4-bis(3-mercaptobutyryloxy)butane (e.g., "Karenz MT (registered trademark) BD1", produced by Showa Denko K.K.).

(Difunctional Epoxy Compound)

The difunctional epoxy compound is a compound that has two epoxy groups in one molecule. Examples thereof include an aromatic epoxy resin, such as a bisphenol A type epoxy resin, a bisphenol F type epoxy resin, a bisphenol S type epoxy resin, a bisphenol type epoxy resin, and a naphthalene type difunctional epoxy resin, and an aliphatic epoxy compound, such as 1,6-hexanediol glycidyl ether.

These compounds may be used alone or as a combination of two or more kinds thereof.

Specific examples thereof include "jER (registered trademark) 828", "jER (registered trademark) 834", "jER (registered trademark) 1001", "jER (registered trademark) 1004", and "jER (registered trademark) YX-4000", produced by Mitsubishi Chemical Corporation. In addition, an epoxy compound having an atypical structure that is difunctional may also be used. These compounds may be used alone or as a combination of two or more kinds thereof.

(Difunctional Carboxy Compound)

It suffices that the difunctional carboxy compound is a compound that has two carboxy groups, and examples thereof include oxalic acid, malonic acid, succinic acid, glutaric acid, adipic acid, maleic acid, fumaric acid, isophthalic acid, and terephthalic acid. Among these, isophthalic acid, terephthalic acid, adipic acid, and the like are preferred from the standpoint of the strength and the toughness of the primer.

(Monofunctional Radical-polymerizable Monomer)

The monofunctional radical-polymerizable monomer is a monomer that has one ethylenic unsaturated bond. Examples thereof include a styrene based monomer, such as styrene monomer, $\alpha$-, o-, m-, and p-alkyl, nitro, cyano, amido, and ester derivatives of styrene, chlorostyrene, vinyltoluene, and divinylbenzene; and a (meth)acrylate ester compound, such as ethyl (meth)acrylate, methyl (meth)acrylate, n-propyl (meth)acrylate, isopropyl (meth)acrylate, hexyl (meth)acrylate, 2-ethylhexyl (meth)acrylate, lauryl (meth)acrylate, dodecyl (meth)acrylate, cyclopentyl (meth)acrylate, cyclohexyl (meth)acrylate, tetrahydrofuryl (meth)acrylate, acetoacetoxyethyl (meth)acrylate, dicyclopentenyloxyethyl (meth)acrylate, phenoxyethyl (meth)acrylate, and glycidyl (meth)acrylate. One or more of the compounds can be used either singly or as combined. Among these, one or a combination of styrene, methyl (meth)acrylate, 2-ethylhexyl (meth)acrylate, and phenoxyethyl (meth)acrylate is preferred from the standpoint of the strength and the toughness of the primer.

The composition containing a radical-polymerizable monomer may contain a solvent and optionally additives such as a colorant, for sufficiently performing the radical polymerization reaction to form a desired in-situ polymerizable composition layer. In that case, in the constituent components other than the solvent in the composition, the monofunctional radical-polymerizable monomer preferably constitutes a major component. The major component herein means that the content of the monofunctional radical-polymerizable compound is 50 to 100% by mass. The content is preferably 60% by mass or more, and more preferably 80% by mass or more.

As a polymerization initiator for the radical polymerization reaction, for example, an organic peroxide compound, a photoinitiator, and the like having been known may be preferably used. An ordinary temperature radical polymerization initiator having a combination of an organic peroxide compound and a cobalt salt or an amine compound may also be used. Examples of the organic peroxide compound include compounds classified into a ketone peroxide, a peroxy ketal, a hydroperoxide, a diallyl peroxide, a diacyl peroxide, a peroxy ester, and a peroxy dicarbonate. The photoinitiator used is preferably a compound capable of initiating the polymerization with an ultraviolet ray to visible light.

The radical polymerization reaction is preferably performed at ordinary temperature to 200°C for 5 to 90 minutes under heating while depending on the kinds of the reaction compounds and the like. In a case of photo-curing, the polymerization reaction is performed by irradiation with ultraviolet rays or visible light. Specifically, the in-situ polymerizable composition layer formed of the radical polymerizable compound can be formed by coating with the composition followed by heating or photoirradiation for radical polymerization.

(In-situ Polymerizable Composition Layer B)

An in-situ polymerizable composition layer B is formed of a polymer of the above-mentioned in-situ polymerizable composition (B).

The in-situ polymerizable composition layer B can be formed by polyaddition reaction of at least one of the above (1) to (6), in the presence of a catalyst, in a solution of a maleic anhydride-modified polypropylene or a modified polyphenylene ether. As the catalyst for polyaddition reaction, for example, tertiary amines such as triethylamine and 2,4,6-tris(dimethylaminomethyl)phenol, and phosphorus compounds such as triphenyl phosphines are preferably used. The polyaddition reaction is, though depending on the formulation of the composition, preferably carried out by heating at room temperature to 200°C for 5 to 120 minutes.

Specifically, the in-situ polymerizable composition layer B can be formed by dissolving a maleic anhydride-modified polypropylene or a modified polyphenylene ether and a composition containing at least one of the above (1) to (6) in a solvent, then applying the resultant solution to the thermoplastic resin material 2, and appropriately evaporating the solvent, followed by heating for polyaddition reaction. The in-situ polymerizable composition layer B can also be formed by arranging a B-staged film of a mixture of a maleic anhydride-modified polypropylene or a modified polyphenylene ether and a composition containing at least one of the above (1) to (6), on the thermoplastic resin material 2, and heating the film for polyaddition reaction.

The in-situ polymerizable composition layer B can also be formed by radically polymerizing a composition containing the above (7) monofunctional radical-polymerizable monomer, in a solution of a maleic anhydride-modified polypropylene or a modified polyphenylene ether. The radical polymerization is, though depending on the formulation of the composition, preferably carried out by heating at room temperature to 200°C for 5 to 90 minutes. For photocuring, the polymerization reaction is carried out by irradiation with UV ray or visible ray.

Specifically, the in-situ polymerizable composition layer B can be formed by dissolving a maleic anhydride-modified polypropylene or a modified polyphenylene ether and a composition containing the above (7) monofunctional radical-polymerizable monomer in a solvent, then applying the resultant solution to the thermoplastic resin material 2, followed by heating or photoirradiation for radical polymerization. The in-situ polymerizable composition layer B can also be formed by arranging a B-staged film of a mixture of a maleic anhydride-modified polypropylene or a modified polyphenylene ether and a composition containing the above (7) monofunctional radical-polymerizable monomer on the thermoplastic resin material 2, and heating or photoirradiating the film for polyaddition reaction.

(Maleic Anhydride-modified Polypropylene)

The maleic anhydride-modified polypropylene is a polypropylene graft-modified with maleic anhydride. It includes Kayabrid 002PP, 002PP-NW, 003PP and 003PP-NW all by Kayaku Akzo Corporation, and Modic Series by Mitsubishi Chemical Corporation.

A polypropylene additive functionalized with maleic anhydride, such as SCONA TPPP2112GA, TPPP8112GA and TPPP9212GA all by BYK Corporation can be used together.

(Modified Polyphenylene Ether)

Any known one can be used as the modified polyphenylene ether.

The modified polyphenylene ether is one prepared by blending a polystyrene, a polyamide, a polyphenylene sulfide or a polypropylene into a polyphenylene ether, and includes NORYL Series (PPS/PS):731, 7310, 731F and 7310F all by SABIC Corporation, Zylon Series (PPE/PS, PP/PPE, PA/PPE, PPS/PPE and PPA/PPE) all by Asahi Kasei Chemical Corporation, and Iupiace Series and Lemalloy Series (PPE/PS, PPE/PA) all by Mitsubishi Engineering Plastics Corporation.

The total amount of the above (1) to (7) for use in forming the in-situ polymerizable composition layer B is preferably 5 to 100 parts by mass relative to the amount, 100 parts by mass of the maleic anhydride-modified polypropylene or the modified polyphenylene ether, more preferably 5 to 60 parts by mass, even more preferably 20 to 40 parts by mass.

(In-situ Polymerizable Composition Layer C)

An in-situ polymerizable composition layer C is formed of a polymer of the above-mentioned in-situ polymerizable composition (C).

The in-situ polymerizable composition layer C can be formed by polyaddition reaction of at least one of the above (1) to (6) in the presence of a catalyst in a solution containing a thermoplastic resin differing from the thermoplastic resin to constitute the thermoplastic resin material 2. As the catalyst for polyaddition reaction, for example, tertiary amines such as triethylamine and 2,4,6-tris(dimethylaminomethyl)phenol, and phosphorus compounds such as triphenyl phosphines are preferably used. The polyaddition reaction is, though depending on the formulation of the composition, preferably carried out by heating at room temperature to 200°C for 5 to 120 minutes.

Specifically, for example, the in-situ polymerizable composition layer C can be formed by dissolving a thermoplastic resin that differs from the thermoplastic resin to constitute the thermoplastic resin material 2, and a composition containing at least one of the above (1) to (6) in a solvent, then applying the resultant solution to the thermoplastic resin material 2, and appropriately evaporating the solvent, followed by heating for polyaddition reaction. The in-situ polymerizable composition layer C can also be formed by arranging a B-staged film of a mixture of a thermoplastic resin that differs from the thermoplastic resin to constitute the thermoplastic resin material 2, and a composition containing at least one of the above (1) to (6), on the thermoplastic resin material 2, and heating the film for polyaddition reaction.

The in-situ polymerizable composition layer C can also be formed by radically polymerizing a composition containing the above (7) monofunctional radical-polymerizable monomer, in a solution of a thermoplastic resin that differs from the thermoplastic resin to constitute the thermoplastic resin material 2. The radical polymerization is, though depending on the formulation of the composition, preferably carried out by heating at room temperature to 200°C for 5 to 90 minutes. For photocuring, the polymerization reaction is carried out by irradiation with UV ray or visible ray.

Specifically, for example, the in-situ polymerizable composition layer C can be formed by dissolving a thermoplastic resin that differs from the thermoplastic resin to constitute the thermoplastic resin material 2, and a composition containing the above (7) monofunctional radical-polymerizable monomer in a solvent, then applying the resultant solution to the thermoplastic resin material 2, followed by heating or photoirradiation for radical polymerization. The in-situ polymerizable composition layer C can also be formed by arranging a B-staged film of a mixture of a thermoplastic resin that differs from the thermoplastic resin to constitute the thermoplastic resin material 2 and a composition containing the above (7) monofunctional radical-polymerizable monomer on the thermoplastic resin material 2, and heating or photoirradiating the film for radical polymerization reaction.

(In-situ Polymerizable Composition Layer D)

An in-situ polymerizable composition layer D is formed of a polymer of the above-mentioned in-situ polymerizable composition (D).

The in-situ polymerizable composition layer D can be formed by polyaddition reaction of at least one of the above (1) to (6) in the presence of a catalyst in a solution containing a maleic anhydride-modified polypropylene or a modified polyphenylene ether, followed by mixing with a thermoplastic resin that differs from the thermoplastic resins to constitute the thermoplastic resin material 2. Further, the layer can also be formed by polyaddition reaction of at last one of the above (1) to (6) in the presence of a catalyst in a solution containing a thermoplastic resin that differs from the thermoplastic resin to constitute the thermoplastic resin material 2, followed by mixing with a maleic anhydride-modified polypropylene or a modified polyphenylene ether. Also the layer can be formed by polyaddition reaction of a maleic anhydride-modified polypropylene or a modified polyphenylene ether, and a thermoplastic resin that differs from the thermoplastic resin to constitute the thermoplastic resin material 2, and at least one of the above (1) to (6) in the presence of a catalyst. As the catalyst for polyaddition reaction, for example, tertiary amines such as triethylamine and 2,4,6-tris(dimethylaminomethyl)phenol, and phosphorus compounds such as triphenyl phosphines are preferably used. The polyaddition reaction is, though depending on the formulation of the composition, preferably carried out by heating at room temperature to 200°C for 5 to 120 minutes.

Specifically, for example, the in-situ polymerizable composition layer D can be formed by dissolving a maleic anhydride-modified polypropylene or a modified polyphenylene ether, and a thermoplastic resin that differs from the thermoplastic resin to constitute the thermoplastic resin material 2, and a composition containing at least one of the above (1) to (6) in a solvent, then applying the resultant solution to the thermoplastic resin material 2, and appropriately evaporating the solvent, followed by heating for polyaddition reaction. The in-situ polymerizable composition layer D can also be formed by arranging a B-staged film of a mixture of a maleic anhydride-modified polypropylene or a modified polyphenylene ether, and a thermoplastic resin that differs from the thermoplastic resin to constitute the thermoplastic resin material 2, and a composition containing at least one of the above (1) to (6), on the thermoplastic resin material 2, and heating the film for polyaddition reaction.

The in-situ polymerizable composition layer D can also be formed by radically polymerizing a composition containing the above (7) monofunctional radical-polymerizable monomer, in a solution containing a maleic anhydride-modified polypropylene or a modified polyphenylene ether, and a thermoplastic resin that differs from the thermoplastic resin to constitute the thermoplastic resin material 2. The radical polymerization is, though depending on the formulation of the composition, preferably carried out by heating at room temperature to 200°C for 5 to 90 minutes. For photocuring, the polymerization reaction is carried out by irradiation with UV ray or visible ray.

Specifically, for example, the in-situ polymerizable composition layer D can be formed by dissolving a maleic anhydride-modified polypropylene or a modified polyphenylene ether, and a thermoplastic resin that differs from the thermoplastic resin to constitute the thermoplastic resin material 2, and a composition containing the above (7) monofunctional radical-polymerizable monomer in a solvent, then applying the resultant solution to the thermoplastic resin material 2, followed by heating or photoirradiation for radical polymerization. The in-situ polymerizable composition layer D can also be formed by arranging a B-staged film of a mixture of a maleic anhydride-modified polypropylene or a modified polyphenylene ether, and a thermoplastic resin that differs from the thermoplastic resin to constitute the thermoplastic resin material 2 and a composition containing the above (7) monofunctional radical-polymerizable monomer on the thermoplastic resin material 2, and heating or photoirradiating the film for radical polymerization reaction.

The mode of reaction to occur in forming the in-situ polymerizable composition layer includes a variety of modes of reaction of a maleic anhydride-modified polypropylene or a modified polyphenylene ether and a difunctional epoxy resin, and reaction of a maleic anhydride-modified polypropylene or a modified polyphenylene ether and a difunctional phenol compound, but could not comprehensively express specific embodiments based on the combinations thereof. Consequently, it can be said to be impossible or impracticable to directly specify the in-situ polymerizable composition layer based on the structure or the characteristics thereof.

[Thermosetting Resin Layer 32]

In the case where the primer layer 3 is composed of plural layers containing the above-mentioned in-situ polymerizable composition layer 31, as shown in Fig. 2, the primer layer 3 can contain a thermosetting resin layer 32 formed of a composition containing a thermosetting resin, between the in-situ polymerizable composition layer 31 and the thermoplastic resin material 2.

The thermosetting resin-containing composition may contain a solvent and depending on necessity additives, such as a colorant, for sufficiently performing the curing reaction of the thermosetting resin to form the target thermosetting resin layer. In that case, in the constituent components other than the solvent contained in the composition, the thermosetting resin is preferably a major component. The major component herein means that the content of the thermosetting resin is 40 to 100% by mass. The content is preferably 60% by mass or more, more preferably 70% by mass or more, even more preferably 80% by mass or more.

Examples of the thermosetting resin include a urethane resin, an epoxy resin, a vinyl ester resin, and an unsaturated polyester resin.

The thermosetting resin layer 32 may be formed of one alone of these resins, or may be formed of a mixture of two or more thereof. Also, the thermosetting resin layer 32 may be formed of plural layers, in which each layer may be formed of a composition containing a different thermosetting resin.

The coating method for forming the thermosetting resin layer 32 by the use of a composition containing a monomer for the thermosetting resin is not specifically limited, and examples thereof include a spray coating method and a dipping method.

The thermosetting resin in the present embodiment means widely a resin that is cured through crosslinking, and is not limited to a thermal curing type, but encompasses an ordinary temperature curing type and a photocuring type. The photocuring type can be cured within a short period of time through irradiation of visible light or an ultraviolet ray. The photocuring type may be used in combination with the thermal curing type and/or the ordinary temperature curing type. Examples of the photocuring type include a vinyl ester resin, such as "Ripoxy (registered trademark) LC-760" and "Ripoxy (registered trademark) LC-720", produced by Showa Denko K.K.

(Urethane Resin)

The urethane resin is generally a resin obtained through reaction of an isocyanato group of an isocyanate compound and a hydroxy group of a polyol compound, and is preferably a urethane resin that corresponds to the definition in ASTM D16 "coating containing polyisocyanate having vehicle nonvolatile content of 10 wt% or more". The urethane resin may be either a one-component type or a two-component type.

Examples of the one-component type urethane resin include an oil modification type (cured through oxidation polymerization of an unsaturated fatty acid group), a moisture curing type (cured through reaction of an isocyanato group and water in air), a block type (cured through reaction of an isocyanato group formed by dissociation of a block agent under heat and a hydroxy group), and a lacquer type (cured through drying by evaporation of a solvent). Among these, a moisture curing one-component type urethane resin is preferably used from the standpoint of the handleability and the like. Specific examples thereof include "UM-50P", produced by Showa Denko K.K.

Examples of the two-component type urethane resin include a catalyst curing type (cured through reaction of an isocyanato group and water in air or the like in the presence of a catalyst) and a polyol curing type (cured through reaction of an isocyanato group and a hydroxy group of a polyol compound).

Examples of the polyol compound in the polyol curing type include a polyester polyol, a polyether polyol, and a phenol resin.

Examples of the isocyanate compound having an isocyanato group in the polyol curing type include an aliphatic isocyanate, such as hexamethylene diisocyanate (HDI), tetramethylene diisocyanate, and a dimer acid diisocyanate; an aromatic isocyanate, such as 2,4- or 2,6-tolylene diisocyanate (TDI) or a mixture thereof, p-phenylene diisocyanate, xylylene diisocyanate, and diphenylmethane diisocyanate (MDI) and polymeric MDI, which is a polynuclear mixture thereof; and an alicyclic isocyanate, such as isophorone diisocyanate (IPDI).

The mixing ratio of the polyol compound and the isocyanate compound in the polyol curing two-component type urethane resin is preferably in a range of 0.7 to 1.5 in terms of molar equivalent ratio of (hydroxy group)/(isocyanato group).

Examples of the urethanation catalyst used in the two-component type urethane resin include an amine based catalyst, such as triethylenediamine, tetramethylguanidine, N,N,N',N'-tetramethylhexane-1,6-diamine, dimethyl ether amine, N,N,N',N'',N''-pentamethyldipropylenetriamine, N-methylmorpholine, bis(2-dimethylaminoethyl) ether, dimethylaminoethoxyethanol, and triethylamine; and organotin based catalyst, such as dibutyltin diacetate, dibutyltin dilaurate, dibutyltin thiocarboxylate, and dibutyltin dimaleate.

In the polyol curing type, in general, the urethanation catalyst is preferably mixed in an amount of 0.01 to 10 parts by mass per 100 parts by mass of the polyol compound.

(Epoxy Resin)

The epoxy resin is a resin having at least two epoxy groups in one molecule.

Examples of a prepolymer before curing of the epoxy resin include an ether based bisphenol type epoxy resin, a novolac type epoxy resin, a polyphenol type epoxy resin, an aliphatic type epoxy resin, an ester based aromatic epoxy resin, an alicyclic epoxy resin, and an ether-ester based epoxy resin, and among these, a bisphenol A type epoxy resin is preferably used. These may be used alone or as a combination of two or more kinds thereof.

Specific examples of the bisphenol A type epoxy resin include "jER (registered trademark) 828" and "jER (registered trademark) 1001", produced by Mitsubishi Chemical Corporation.

Specific examples of the novolac type epoxy resin include "D.E.N.

(registered trademark) 438 (registered trademark)", produced by The Dow Chemical Company.

Examples of the curing agent used for the epoxy resin include known curing agents, such as an aliphatic amine, an aromatic amine, an acid anhydride, a phenol resin, a thiol compound, an imidazole compound, and a cationic catalyst. The curing agent as a combination with a long-chain aliphatic amine and/or a thiol compound can provide the effect of providing a large elongation and excellent impact resistance.

Specific examples of the thiol compound include the same compounds as exemplified for the thiol compound for forming a functional group-containing layer to be mentioned hereinunder. Among these, pentaerythritol tetrakis(3-mercaptobutyrate) (e.g., "Karenz MT (registered trademark) PE1", produced by Showa Denko K.K.) is preferred from the standpoint of the elongation and the impact resistance.

(Vinyl Ester Resin)

The vinyl ester resin contains a vinyl ester compound dissolved in a polymerizable monomer (such as styrene). The vinyl ester resin is also referred to as an epoxy (meth)acrylate resin, and encompasses a urethane (meth)acrylate resin.

As the vinyl ester resin, for example, those described in "Polyester Jushi Handbook" (Polyester Resin Handbook) (published by Nikkan Kogyo Shimbun, Ltd., 1988), "Toryo Yougo Jiten" (Paint Terminological Dictionary) (published by Japan Society of Colour Material, 1993), and the like can be used, and specific examples thereof include "Ripoxy (registered trademark) R-802", "Ripoxy (registered trademark) R-804", and "Ripoxy (registered trademark) R-806", produced by Showa Denko K.K.

Examples of the urethane (meth)acrylate resin include a radical polymerizable unsaturated group-containing oligomer obtained in such a manner that an isocyanate compound and a polyol compound are reacted, and then a hydroxy group-containing (meth)acryl monomer (and depending on necessity a hydroxy group-containing allyl ether monomer) is reacted therewith. Specific examples thereof include "Ripoxy (registered trademark) R-6545", Showa Denko K.K.

The vinyl ester resin can be cured through radical polymerization by heating in the presence of a catalyst, such as an organic peroxide.

The organic peroxide is not particularly limited, and examples thereof include a ketone peroxide compound, a peroxyketal compound, a hydroperoxide compound, a diallylperoxide compound, a diacylperoxide compound, a peroxyester compound, and a peroxydicarbonate compound. The curing can be performed at ordinary temperature by combining these compounds with a cobalt metal salt or the like.

The cobalt metal salt is not particularly limited, and examples thereof include cobalt naphthenate, cobalt octylate, and cobalt hydroxide. Among these, cobalt naphthenate and/or cobalt octylate are preferred.

(Unsaturated Polyester Resin)

The unsaturated polyester resin contains a condensation product (i.e., unsaturated polyester) obtained through esterification reaction of a polyol compound and an unsaturated polybasic acid (and depending on necessity a saturated polybasic acid), dissolved in a polymerizable monomer (such as styrene).

As the unsaturated polyester resin, for example, those described in "Polyester Jushi Handbook" (Polyester Resin Handbook) (published by Nikkan Kogyo Shimbun, Ltd., 1988), "Toryo Yougo Jiten" (Paint Terminological Dictionary) (published by Japan Society of Colour Material, 1993), and the like can be used, and specific examples thereof include "Rigolac (registered trademark)", produced by Showa Denko K.K.

The unsaturated polyester resin can be cured through radical polymerization by heating in the presence of a catalyst, as similar to the vinyl ester resin.

[Action of Primer Layer 3]

The primer layer 3 is formed on the surface of the thermoplastic resin material, or on the surface and the surface layer of the thermoplastic resin material.

The primer layer 3 on the surface of the thermoplastic resin material means a layer formed by applying a solution prepared by dissolving a composition to form the primer layer in a solvent onto the surface of the thermoplastic resin material followed by evaporating the solvent on the surface of the thermoplastic resin material.

The primer layer 3 on the surface layer of the thermoplastic resin material means a layer formed by applying a solution prepared by dissolving a composition to form the primer layer in a solvent onto the surface of the thermoplastic resin material so as to make the composition to form the primer layer penetrate into the surface layer of the thermoplastic resin material having swollen by penetration of the solvent thereinto, followed by evaporating the solvent.

The primer layer 3 gives excellent bondability with the other thermoplastic resin material to be bonded. A primer-attached thermoplastic resin material having the above-mentioned bonding performance over a long period of time of a few months can be obtained.

Also, the surface of the thermoplastic resin material is protected by the primer layer 3 so as to be prevented from adhesion of dirt or degradation such as oxidation.

[Resin-Resin Bonded Article 4]

As shown in Fig. 3, the resin-resin bonded article 4 of the present invention is one formed by welding the primer layer 3 of the primer-attached thermoplastic resin material 1 and the other thermoplastic resin material 5. The thermoplastic resin to constitute the other thermoplastic resin material 5 may be the same as or differ from the thermoplastic resin to constitute the primer-attached thermoplastic resin material 1.

In bonding two thermoplastic resin materials, even when the thermoplastic resin to constitute one thermoplastic resin material is the same as the thermoplastic resin to constitute the other thermoplastic resin material, but when one or both thermoplastic resins contain a filler or fibers or when the thermoplastic resin is blended with any other thermoplastic resin, the bonding strength between the two thermoplastic resin materials may be insufficient. However, in the present invention, the other thermoplastic resin material 5 and the primer-attached thermoplastic resin material 1 can be firmly welded to each other.

In the case where the thermoplastic resin to constitute the primer-attached thermoplastic resin material 1 is the same as the thermoplastic resin to constitute the other thermoplastic resin material 5, the proportion of the monomer that accounts for the maximum content in the monomers constituting the thermoplastic resin is 70% by mass or more in both cases, preferably 70 to 100% by mass, more preferably 80 to 100% by mass, even more preferably 85 to 100% by mass.

In the case where the thermoplastic resin to constitute the primer-attached thermoplastic resin material 1 and/or the thermoplastic resin to constitute the other thermoplastic resin material 5 contains at least one selected from the group consisting of a filler and fibers, the content thereof is preferably 5 to 50% by mass, more preferably 5 to 40% by mass, even more preferably 5 to 30% by mass. When the content falls within the above range, the bonding strength between the other thermoplastic resin material 5 and the primer-attached thermoplastic resin material 1 can be enhanced.

In the case where the thermoplastic resin to constitute the primer-attached thermoplastic resin material 1 and/or the thermoplastic resin to constitute the other thermoplastic resin material 5 is a blend of a main thermoplastic resin and a dependent thermoplastic resin, the content of the dependent thermoplastic resin is preferably 5 to 40% by mass, more preferably 5 to 30% by mass, even more preferably 5 to 20% by mass. When the content falls within the above range, the bonding strength between the other thermoplastic resin material 5 and the primer-attached thermoplastic resin material 1 can be enhanced.

The content can be calculated according to the following formula.

$$\text{Content (\% by mass)} = [\text{B}/(\text{A}+\text{B})] \times 100$$

wherein A is a mass (g) of the main thermoplastic resin of the thermoplastic resin to constitute the primer-attached thermoplastic resin material and/or the thermoplastic resin to constitute the other thermoplastic resin material, and B is a mass (g) of the dependent thermoplastic resin of the thermoplastic resin to constitute the primer-attached thermoplastic resin material and/or the thermoplastic resin to constitute the other thermoplastic resin material.

In the present invention, even when the thermoplastic resin to constitute the other thermoplastic resin material 5 differs from the thermoplastic resin to constitute the primer-attached thermoplastic resin material 1, the other thermoplastic resin material 5 and the primer-attached thermoplastic resin material 1 can be firmly welded to each other. Further, even when the SP value of the thermoplastic resin to constitute the other thermoplastic resin material 5 and the SP value of the thermoplastic resin to constitute the primer-attached thermoplastic resin material 1 are separated from each other, the other thermoplastic resin material 5 and the primer-attached thermoplastic resin material 1 can be firmly welded.

The thickness (thickness after dried) of the primer layer is, though depending on the type of material of the primer-attached thermoplastic resin material 1 and the other thermoplastic resin material 5 and the contact area of the bonding portion of the two, preferably 1 $\mu$m to 500 $\mu$m from the viewpoint of attaining excellent bonding strength, more preferably 3 $\mu$m to 100 pm, even more preferably 5 $\mu$m to 70 $\mu$m. The thickness (thickness after dried) of the in-situ polymerizable composition layer is preferably 1 to 60 $\mu$m.

In the case where the primer layer is formed of plural layers, the thickness (thickness after dried) of the primer layer is the total thickness of the constituent layers.

As the method for producing the resin-resin bonded article 4, employable is a method of welding the other thermoplastic resin material to the primer layer 3 of the primer-attached thermoplastic resin material 1 according to at least one method selected from the group consisting of an ultrasonic welding method, a vibration welding method, an electromagnetic induction method, a high frequency method, a laser method, and a thermal press method, or a method of molding the other thermoplastic resin material on the primer layer 3 of the primer-attached thermoplastic resin material 1 according to an injection-molding method.

As the other thermoplastic resin material, a primer-attached thermoplastic resin material having the same configuration as that of the primer-attached thermoplastic resin material of the present invention can be used, and the primer layers of the two may be welded to each other.

The thermoplastic resin to constitute the primer-attached thermoplastic resin material 1 may be the same as or different from the thermoplastic resin to constitute the other thermoplastic resin material 5, but are, from the viewpoint of firmly welding the two, preferably the same as each other.

Examples

Next, specific examples of the present invention are described, but the present invention is not particularly limited to these examples.

<Thermoplastic resin material for test pieces>

Using an injection-molding machine (SE100V, by Sumitomo Heavy Industries, Ltd.) under the condition in Table 1 given below, prepared were thermoplastic resin materials for test pieces (width 10 mm, length 45 mm, thickness 3 mm) for tensile test: talc-blended PP resin, glass fiber-blended PA6 resin, glass fibers-blended PA66 resin, m-PPE resin, PPS resin, PEI resin, PC resin, and glass fibers-blended PBT resin.

Table 1

| Resin | Manufacturer | ID Code | Cylinder Temperature | Mold Temperature | Injection Speed | Pressure Retention | Cooling Time |
|---|---|---|---|---|---|---|---|
| | | | [°C] | [°C] | mm/sec | [MPa/sec] | [sec] |
| PP (talc 30% by mass) | Sun Allomer Ltd. | TRC104N | 210 | 30 | 50 | 195/7 | 10 |
| PA6 (GF 30% by mass) | DSM | Novamid | 270 | 80 | 50 | 100/4 | 15 |
| PA66 (GF30% by mass) | DSM | Novamid | 290 | 80 | 50 | 100/4 | 15 |
| m-PPE | SABIC | NORYL-731 | 290 | 120 | 50 | 150/15 | 15 |
| PPS | DIC | FZ-2140 | 310 | 140 | 50 | 100/3 | 15 |

(continued)

| Resin | Manufacturer | ID Code | Cylinder Temperature | Mold Temperature | Injection Speed | Pressure Retention | Cooling Time |
|---|---|---|---|---|---|---|---|
| | | | [°C] | [°C] | mm/sec | [MPa/sec] | [sec] |
| PEI | SABIC | Ultem1040 | 350 | 150 | 50 | 160/13 | 15 |
| PC | SABIC | Makrolon (registered trademark) 2405 | 280 | 80 | 100 | 130/10.4 | 30 |
| PBT (GF 30% by mass) | SABIC | Valox (registered trademark) 507 | 270 | 100 | 65 | 120/5 | 15 |

<Formation of Test Pieces: Examples 1 to 3, Comparative Example 1>

(Production of in-situ polymerizable composition-1 for primer layer formation)

100 g of a difunctional epoxy resin: "jER (registered trademark) 1001" (bisphenol A-type epoxy resin, molecular weight about 900) by Mitsubishi Chemical Corporation, 6.2 g of bisphenol S, and 0.4 g of triethylamine were dissolved in 197 g of toluene to prepare an in-situ polymerizable composition-1 (in-situ polymerizable thermoplastic epoxy resin composition).

(Formation of primer layer)

Next, the in-situ polymerizable composition-1 was applied to one surface of the thermoplastic resin material for test pieces, PBT, PC, PEI or PPS, so as to have a thickness after dried of 80 $\mu$m, according to a spraying method. This was left in air at room temperature (23°C) for 30 minutes to evaporate the solvent, and then put in a furnace at 150°C for 30 minutes for polyaddition reaction, and thereafter cooled down to room temperature (23°C) to give test pieces having a thermoplastic epoxy resin as a primer layer, PBT-1, PC-1, PEI-1 and PPS-1.
Hereinunder the surface having a primer layer formed thereon is referred to as a primer surface, and the surface not having a primer layer is referred to as a primerless surface. In the following Tables 2 to 4 and 6, the surface having a primer layer is expressed as (yes), and the surface not having a primer layer is expressed as (no).

<Example 1>

(Welding)

In a state where the primer surface of PPS-1 and the primer surface of PEI-1 were overlapped so that the bonded portion could have an overlapping length of 5 mm and an overlapping width of 10 mm, the two were ultrasonically welded using an ultrasonic welding machine SONOPET-JII430T-M (28.5 KHz) by Seidensha Electronic Industry Co., Ltd. to give a test piece 1 (resin-resin bonded article). Here, the bonded portion means a portion where the thermoplastic resin materials for test pieces were overlapped.

(Tensile Shear Strength)

The test piece 1 was left at room temperature (23°C) for 1 day, and then tested in a tensile shear strength test according to ISO19095 1-4 using a tensile tester (universal tester Autograph "AG-IS" by Shimadzu Corporation; load cell 10 kN, tensile speed 10 mm/min, temperature 23°C, 50% RH) to measure the bonding strength. The measurement results are shown in Table 2 below.

<Example 2>

(Welding)

The primer surface of PBT-1 and the primer surface of PC-1 were ultrasonically welded according to the same process as in Example 1 to give a test piece 2 (resin-resin bonded article).

(Tensile Shear Strength)

The test piece 2 was tested in the tensile shear strength test according to the same process as in Example 1. The measurement results are shown in Table 2 below.

<Example 3>

(Welding)

The primer surface of PBT-1 and the primerless surface of PC-1 were ultrasonically welded according to the same process as in Example 1 to give a test piece 3 (resin-resin bonded article).

(Tensile Shear Strength)

The test piece 3 was tested in the tensile shear strength test according to the same process as in Example 1. The measurement results are shown in Table 2 below.

<Example 4>

(Welding)

The primer surface of PBT-1 and the primerless surface of PPS-1 were ultrasonically welded according to the same process as in Example 1 to give a test piece 4 (resin-resin bonded article).

(Tensile Shear Strength)

The test piece 4 was tested in the tensile shear strength test according to the same process as in Example 1. The measurement results are shown in Table 2 below.

<Comparative Example 1>

Ultrasonic welding was tried according to the same process as in Example 1 on the primerless surface of PBT-1 and the primerless surface of PPS-1, but welding could not be performed.

Table 2

|  | Example 1 | Example 2 | Example 3 | Example 4 | Comparative Example 1 |
|---|---|---|---|---|---|
| Thermoplastic Resin Material Presence or Absence of Primer | PPS-1 (Yes) | PBT-1 (Yes) | PBT-1 (Yes) | PBT-1 (Yes) | PBT-1 (No) |
| Thermoplastic Resin Material Presence or Absence of Primer | PEI-1 (Yes) | PC-1 (Yes) | PC-1 (No) | PPS-1 (No) | PPS-1 (No) |
| Test Piece | 1 | 2 | 3 | 4 | - |
| Tensile Shear Strength (MPa) | 30 | 28 | 25 | 21 | Bonding impossible |

<Test Pieces: Examples 5 to 7, Comparative Examples 2, 3>

(Production of in-situ polymerizable composition-2 for primer layer formation)

100 g of diphenylmethane diisocyanate ("Millionate MT" by Tosoh Corporation), 54.7 g of propylene glycol and 15.8 g of 4,4'-diaminodiphenylmethane were dissolved in 287 g of acetone to prepare an in-situ polymerizable composition-2 (in-situ polymerizable urethane resin composition).

(Formation of primer layer)

Next, the in-situ polymerizable composition-2 was applied to one surface of the thermoplastic resin material for test pieces, PA6, PA66, PBT or PC, so as to have a thickness after dried of 90 $\mu$m, according to a spraying method. This was left in air at room temperature (23°C) for 30 minutes to evaporate the solvent, and then put in a furnace at 150°C for 30 minutes for polyaddition reaction, and thereafter cooled down to room temperature (23°C) to give test pieces having a urethane resin as a primer layer, PA6-1, PA66-1, PBT-2 and PC-2.

<Example 5>

(Welding)

In a state where the primer surface of PA6-1 and the primer surface of PBT-2 were overlapped so that the bonded portion could have an overlapping length of 5 mm and an overlapping width of 10 mm, the two were ultrasonically welded using an ultrasonic welding machine SONOPET-JII430T-M (28.5 KHz) by Seidensha Electronic Industry Co., Ltd. to give a test piece 5 (resin-resin bonded article).

(Tensile Shear Strength)

The test piece 5 was tested in the tensile shear strength test according to the same process as in Example 1 to measure the bonding strength. The measurement results are shown in Table 3 below.

<Examples 6, 7>

In the same manner as in Example 5 and in the combination described in Table 3 below, test pieces were produced and tested in the tensile shear strength test. The results are shown in Table 3 below.

<Comparative Example 2>

Ultrasonic welding was tried according to the same process as in Example 5 on the primerless surface of PA6-1 and the primerless surface of PBT-2, but welding could not be performed.

<Comparative Example 3>

Ultrasonic welding was tried according to the same process as in Example 5 on the primerless surface of PA66-1 and the primerless surface of PC-2, but welding could not be performed.

Table 3

|  | Example 5 | Example 6 | Example 7 | Comparative Example 2 | Comparative Example 3 |
|---|---|---|---|---|---|
| Thermoplastic Resin Material Presence or Absence of Primer | PA6-1 (Yes) | PA66-1 (Yes) | PA66-1 (Yes) | PA6-1 (No) | PA66-1 (No) |
| Thermoplastic Resin Material Presence or Absence of Primer | PBT-2 (Yes) | PC-2 (Yes) | PA6-1 (No) | PBT-2 (No) | PC-2 (No) |
| Test Piece | 5 | 6 | 7 | - | - |
| Tensile Shear Strength (MPa) | 23 | 21 | 26 | Bonding impossible | Bonding impossible |

<Test Pieces: Examples 8 to 10, Comparative Examples 4, 5>

(Production of in-situ polymerizable composition-3 for primer layer formation)

5 g of a maleic anhydride-modified polypropylene (Modic (registered trademark) ER321P by Mitsubishi Chemical Corporation), 1.01 g of an epoxy resin (jER (registered trademark) 1001 by Mitsubishi Chemical Corporation) and 0.24 g of bisphenol A were dissolved in 95 g of hot xylene, and then 0.006 g of a catalyst 2,4,6-tris(dimethylaminomethyl)phenol was added thereto and rapidly cooled to give an in-situ polymerizable composition-3 (in-situ polymerizable, maleic anhydride-containing epoxy resin composition).

(Production of in-situ polymerizable composition-4 for primer layer formation)

3.77 g of a modified polyphenylene ether (NOLYL731 by SABIC Corporation), 1.0 g of a difunctional epoxy resin (jER (registered trademark) 1001 by Mitsubishi Chemical Corporation) and 0.22 g of bisphenol A were dissolved in 95 g of hot xylene, then 0.005 g of 2,4,6-tris(dimethylaminomethyl)phenol was added thereto and rapidly cooled to give an in-situ polymerizable composition-4 (in-situ polymerizable, modified polyphenylene ether-containing epoxy resin composition).

(Formation of primer layer)

Next, the in-situ polymerizable composition-3 was applied to one surface of the thermoplastic resin material for test pieces, PP (talc 30% by mass) or PBT so as to have a thickness after dried of 80 $\mu$m, according to a spraying method. This was left in air at room temperature (23°C) for 30 minutes to evaporate the solvent, and then put in a furnace at 150°C for 30 minutes for polyaddition reaction, and thereafter left cooled down to room temperature (23°C) to give test pieces having a maleic anhydride-containing thermoplastic epoxy resin as a primer layer, PP-1 and PBT-3.
Next, the in-situ polymerizable composition-4 was applied to one surface of the thermoplastic resin material for test pieces, m-PPE so as to have a thickness after dried of 80 $\mu$m, according to a spraying method. This was left in air at room temperature (23°C) for 30 minutes to evaporate the solvent, and then put in a furnace at 150°C for 30 minutes for polyaddition reaction, and thereafter left cooled down to room temperature (23°C) to give a test piece having a modified polyphenylene ether-containing epoxy resin as a primer layer, m-PPE-1.

<Example 8>

(Welding)

In a state where the primer surface of PP-1 and the primer surface of m-PPE-1 were overlapped so that the bonded portion could have an overlapping length of 5 mm and an overlapping width of 10 mm, the two were ultrasonically welded using an ultrasonic welding machine SONOPET-JII430T-M (28.5 KHz) by Seidensha Electronic Industry Co., Ltd. to give a test piece 8 (resin-resin bonded article).

(Tensile Shear Strength)

The test piece 8 was tested in the tensile shear strength test according to the same process as in Example 1 to measure the bonding strength. The measurement results are shown in Table 4 below.

<Examples 9, 10>

In the same manner as in Example 8 and in the combination described in Table 4 below, test pieces were produced and tested in the tensile shear strength test. The results are shown in Table 4 below.

<Comparative Example 4>

Ultrasonic welding was tried according to the same process as in Example 8 on the primerless surface of PP-1 and the primerless surface of PBT-3, but welding could not be performed.

<Comparative Example 5>

Ultrasonic welding was tried according to the same process as in Example 8 on the primerless surface of m-PPE-1 and one surface (primerless surface) of the thermoplastic resin material for test pieces PC, but welding could not be performed.

Table 4

|  | Example 8 | Example 9 | Example 10 | Comparative Example 4 | Comparative Example 5 |
|---|---|---|---|---|---|
| Thermoplastic Resin Material Presence or Absence of Primer | PP-1 (Yes) | PP-1 (Yes) | m-PPE-1 (Yes) | PP-1 (No) | m-PPE-1 (No) |
| Thermoplastic Resin Material Presence or Absence of Primer | m-PPE-1 (Yes) | PBT-3 (Yes) | PC (No) | PBT-3 (No) | PC (No) |
| Test Piece | 8 | 9 | 10 | - | - |
| Tensile Shear Strength (MPa) | 19 | 21 | 29 | Bonding impossible | Bonding impossible |

<Test Pieces: Example 11>

The primer-attached thermoplastic resin material PC-1, PBT-1, PEI-1, PPS-1, PA6-1, PA66-1, m-PPE-1 or PP-1 was inserted into a mold for injection molding, and a different thermoplastic resin described in Table 5 was injection-molded thereonto under the same condition as in Table 1 to give test pieces (8 types) in which the bonding portion had an overlapping length of 5 mm and an overlapping width of 10 mm.

(Tensile Shear Strength)

The test pieces were tested in the tensile shear strength test according to the same process as in Example 1. The measurement results are shown in Table 5 below.

Table 5

|  | Example 11 | | | | | | | |
|---|---|---|---|---|---|---|---|---|
| Insert Resin Material | PC-1 | PBT-1 | PEI-1 | PPS-1 | PA6-1 | PA66-1 | m-PPE-1 | PP-1 |
| Injection Molding Resin | PBT | PEI | PC | PEI | PBT | PPS | PBT | PBT |
| Tensile Shear Strength (MPa) | 30 | 32 | 30 | 25 | 24 | 22 | 20 | 12 |

<Examples 12 to 14, Comparative Example 6>

The in-situ polymerizable composition-2 was applied to one surface of a corona-discharged PA6 film (Rayfan (registered trademark) NO(1401) by Toray Corporation, thickness 15 $\mu$m) and a PET film (Lumirror (registered trademark) #25-S10 by Toray Corporation, thickness 12 $\mu$m) so as to have a thickness after dried of 1 $\mu$m, and left at 60°C for 10 minutes for solvent evaporation and polyaddition reaction to form a primer layer on each film.
As described in Table 6, the primer surface of the film and the primer surface of the film were overlapped, then led to pass through hot rolls at 60°C, and further kept at 60°C for 5 minutes so that the films were bonded together. A test piece for a 180° peel test according to ISO29862(2007) of the resin film bonded product (24 mm × 300 mm × 28 $\mu$m, bonding portion length: 275 mm) was prepared and tested in the peel test. The measurement results are shown in Table 6 below.

Table 6

|  | Example 12 | Example 13 | Example 14 | Comparative Example 6 |
|---|---|---|---|---|
| Film Presence or Absence of Primer | PET (Yes) | PET (Yes) | PA6 (Yes) | PA6 (No) |
| Film Presence or Absence of Primer | PA6 (Yes) | PET (Yes) | PA6 (Yes) | PA6 (No) |
| Peel Test (N/10 mm) | 1.2 | 1.1 | 1.3 | Bonding impossible |

Industrial Applicability

The primer-attached thermoplastic resin material of the present invention, which has been bonded and integrated to a different thermoplastic resin material, can be used, for example, as automobile components, such as a door side panel, an engine hood roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and also as smartphones, notebook-size personal computers, tablet personal computers, smartwatches, large-size liquid-crystal televisions (LCD-TV) and chassis of outdoor LED illuminations, but the application thereof is not particularly limited to these examples.

Reference Signs List

1      Primer-attached Thermoplastic Resin Material
2      Thermoplastic Resin Material
3      Primer Layer
31     In-situ Polymerizable Composition Layer
32     Thermosetting Resin Layer
4      Resin-Resin Bonded Article
5      Other Thermoplastic Resin Material

**Claims**

1.  A primer-attached thermoplastic resin material having a thermoplastic resin material and one or plural primer layers laminated on the thermoplastic resin material, wherein:
    at least one layer of the primer layers is an in-situ polymerizable composition layer of an in-situ polymerizable composition polymerized on the thermoplastic resin material.

2.  The primer-attached thermoplastic resin material according to claim 1, wherein the in-situ polymerizable composition layer is a layer that is in direct contact with the thermoplastic resin material.

3.  The primer-attached thermoplastic resin material according to claim 1 or 2, wherein the in-situ polymerizable composition contains at least one of the following (1) to (7):

    (1) A combination of a difunctional isocyanate compound and a diol,
    (2) A combination of a difunctional isocyanate compound and a difunctional amino compound,
    (3) A combination of a difunctional isocyanate compound and a difunctional thiol compound,
    (4) A combination of a difunctional epoxy compound and a diol,
    (5) A combination of a difunctional epoxy compound and a difunctional carboxy compound,
    (6) A combination of a difunctional epoxy compound and a difunctional thiol compound,
    (7) A monofunctional radical-polymerizable monomer.

4.  The primer-attached thermoplastic resin material according to claim 1 or 2, wherein the in-situ polymerizable composition contains a composition containing at least one of the following (1) to (7), and a maleic anhydride-modified polypropylene or a modified polyphenylene ether:

    (1) A combination of a difunctional isocyanate compound and a diol,
    (2) A combination of a difunctional isocyanate compound and a difunctional amino compound,
    (3) A combination of a difunctional isocyanate compound and a difunctional thiol compound,
    (4) A combination of a difunctional epoxy compound and a diol,
    (5) A combination of a difunctional epoxy compound and a difunctional carboxy compound,
    (6) A combination of a difunctional epoxy compound and a difunctional thiol compound,
    (7) A monofunctional radical-polymerizable monomer.

5.  The primer-attached thermoplastic resin material according to claim 1 or 2, wherein the in-situ polymerizable composition contains a composition containing at least one of the following (1) to (7), and a thermoplastic resin differing from the thermoplastic resin that constitutes the thermoplastic resin material:

> (1) A combination of a difunctional isocyanate compound and a diol,
> (2) A combination of a difunctional isocyanate compound and a difunctional amino compound,
> (3) A combination of a difunctional isocyanate compound and a difunctional thiol compound,
> (4) A combination of a difunctional epoxy compound and a diol,
> (5) A combination of a difunctional epoxy compound and a difunctional carboxy compound,
> (6) A combination of a difunctional epoxy compound and a difunctional thiol compound,
> (7) A monofunctional radical-polymerizable monomer.

6. The primer-attached thermoplastic resin material according to claim 1 or 2, wherein the in-situ polymerizable composition contains a composition containing at least one of the following (1) to (7), a maleic anhydride-modified polypropylene or a modified polyphenylene ether, and a thermoplastic resin differing from the thermoplastic resin that constitutes the thermoplastic resin material:

> (1) A combination of a difunctional isocyanate compound and a diol,
> (2) A combination of a difunctional isocyanate compound and a difunctional amino compound,
> (3) A combination of a difunctional isocyanate compound and a difunctional thiol compound,
> (4) A combination of a difunctional epoxy compound and a diol,
> (5) A combination of a difunctional epoxy compound and a difunctional carboxy compound,
> (6) A combination of a difunctional epoxy compound and a difunctional thiol compound,
> (7) A monofunctional radical-polymerizable monomer.

7. The primer-attached thermoplastic resin material according to any one of claims 3 to 6, wherein the in-situ polymerizable composition contains the above (4) and the diol of the above (4) is a difunctional phenol compound.

8. The primer-attached thermoplastic resin material according to any one of claim 1, and 3 to 7, wherein the primer layer has a thermosetting resin layer formed of a composition containing a thermosetting resin between the in-situ polymerizable composition layer and the thermoplastic resin material.

9. The primer-attached thermoplastic resin material according to claim 8, wherein the thermosetting resin is at least one selected from the group consisting of an urethane resin, an epoxy resin, a vinyl ester resin and an unsaturated polyester resin.

10. A method for producing a primer-attached thermoplastic resin material of claim 1, comprising:
applying the in-situ polymerizable composition dissolved in a solvent onto the surface of the thermoplastic resin material followed by polymerizing the in-situ polymerizable composition.

11. A resin-resin bonded article formed by welding another thermoplastic resin material to the primer layer of the primer-attached thermoplastic resin material of any one of claims 1 to 9.

12. The resin-resin bonded article according to claim 11, wherein the another thermoplastic resin material is a primer-attached thermoplastic resin material of any one of claims 1 to 9, and the primer layers of the materials are welded to each other.

13. The resin-resin bonded article according to claim 11 or 12, wherein the monomer accounting for the maximum content of the monomers that constitute the thermoplastic resin to constitute the another thermoplastic resin material is the same as the monomer accounting for the maximum content of the monomers that constitute the thermoplastic resin to constitute the primer-attached thermoplastic resin material of any one of claims 1 to 9, and the content of the monomer is each 70% by mass or more.

14. A production method for a resin-resin bonded article of any one of claims 11 to 13, comprising welding another thermoplastic resin material to the primer layer of the primer-attached thermoplastic resin material according to at least one method selected from the group consisting of an ultrasonic welding method, a vibration welding method, an electromagnetic induction method, a high frequency method, a laser method, and a thermal press method.

15. A production method for a resin-resin bonded article of any one of claims 11 to 13, comprising injection-welding another thermoplastic resin material onto the primer layer of the primer-attached thermoplastic resin material according to an injection molding method.

Fig.1

31

1

3

2

Fig.2

31

32

1

3

2

Fig.3

<div align="center">

**INTERNATIONAL SEARCH REPORT**

</div>

| International application No. |
|---|
| PCT/JP2020/029648 |

**A. CLASSIFICATION OF SUBJECT MATTER**
B32B 27/00(2006.01)i; B32B 27/38(2006.01)i; B32B 27/40(2006.01)i; C09D 5/00(2006.01)i; C08K 5/1515(2006.01)i; C08K 5/29(2006.01)i; C08L 23/26(2006.01)i; C08L 101/00(2006.01)i; C09D 163/00(2006.01)i; C09D 175/04(2006.01)i; C08L 71/12(2006.01)i; B29C 65/04(2006.01)i; B29C 65/06(2006.01)i; B29C 65/08(2006.01)i; B29C 65/16(2006.01)i; B29C 65/18(2006.01)i; B29C 65/30(2006.01)i; B29C 65/70(2006.01)i
FI:     B32B27/00 D; C09D5/00 D; C09D1 63/00; C09D175/04; B29C65/04; B29C65/06; B29C65/08; B29C65/16; B29C65/18; B29C65/30; B29C65/70; C08L23/26; C08L71/12; C08K5/29; C08K5/1515; C08L101/00; B32B27/38; B32B27/40; B32B27/00 Z

According to International Patent Classification (IPC) or to both national classification and IPC

**B. FIELDS SEARCHED**

Minimum documentation searched (classification system followed by classification symbols)
B32B27/00; B32B27/38; B32B27/40; C09D5/00; C08K5/1515; C08K5/29; C08L23/26; C08L101/00; C09D163/00; C09D175/04; C08L71/12; B29C65/04; B29C65/06; B29C65/08; B29C65/16; B29C65/18; B29C65/30; B29C65/70

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/094633 A1 (NIPPON STEEL & SUMIKIN MATERIALS CO., LTD.) 08.06.2017 (2017-06-08) background, page 13, line 26 to page 19, line 24, claims, drawings | 1–7, 10–14 |
| Y | background, page 13, line 26 to page 19, line 24, claims, drawings | 15 |
| X | JP 2011-37150 A (MITSUBISHI PLASTICS INC.) 24.02.2011 (2011-02-24) claims, paragraphs [0010]-[0059], drawings | 1–3, 7–14 |
| Y | claims, paragraphs [0010]-[0059], drawings | 15 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 September 2020 (15.09.2020) | 29 September 2020 (29.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

| International application No. |
| --- |
| PCT/JP2020/029648 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2014-240185 A (TOSHIBA MACHINE CO., LTD.) 25.12.2014 (2014-12-25) claims, background, paragraphs [0043], [0058] | 15 |
| A | WO 2019/116879 A1 (SHOWA DENKO KABUSHIKI KAISHA) 20.06.2019 (2019-06-20) entire text | 1-15 |

Form PCT/ISA/210 (continuation of second sheet) (January 2015)

### INTERNATIONAL SEARCH REPORT
Information on patent family members

International application No.

PCT/JP2020/029648

| Patent Documents referred in the Report | Publication Date | Patent Family | Publication Date |
|---|---|---|---|
| WO 2017/094633 A1 | 08 Jun. 2017 | US 2018/0346672 A1 figures, background art, paragraphs [0081]-[0114], claims EP 3385314 A1 CN 108368280 A KR 10-2018-0089413 A TW 201736456 A | |
| JP 2011-37150 A | 24 Feb. 2011 | (Family: none) | |
| JP 2014-240185 A | 25 Dec. 2014 | US 2014/0339732 A1 background of the invention, paragraphs [0052], [0067], claims DE 102014209099 A1 CN 104162955 A | |
| WO 2019/116879 A1 | 20 Jun. 2019 | TW 201927553 A | |

Form PCT/ISA/210 (patent family annex) (January 2015)

**EP 4 011 617 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8126823 A
- JP 2017202667 A
- JP 2017206014 A
- JP 2017284862 A

**Non-patent literature cited in the description**

- **FEDORS.** *Polym. Eng. Sci.,* 1974, vol. 14, 147
- Properties of Polymers
- Polyester Jushi Handbook" (Polyester Resin Handbook). Nikkan Kogyo Shimbun, Ltd, 1988
- Toryo Yougo Jiten" (Paint Terminological Dictionary). Japan Society of Colour Material, 1993